# EUROPEAN PATENT APPLICATION

(11) **EP 4 621 610 A1**
(43) Date of publication of application: **24.09.2025**
(21) Application number: 23890775.2
(22) Date of filing: 14.11.2023
(51) Int. Cl.: G06F 18/23, G06N 3/0464

(54) **DOORSILL AREA IDENTIFICATION METHOD AND APPARATUS, MEDIUM, AND ELECTRONIC DEVICE**

(30) Priority: 16.11.2022 CN 202211436872
(71) Applicant: Beijing Roborock Innovation Technology Co., Ltd., Beijing 102206 (CN)
(72) Inventor: SONG, Jian, Beijing 102206 (CN); WANG, Lei, Beijing 102206 (CN); HUANG, Tao, Beijing 102206 (CN); LUO, Longyue, Beijing 102206 (CN)
(74) Representative: Winter, Brandl - Partnerschaft mbB
(86) International application number: PCT/CN2023/131539
(87) International publication number: WO 2024/104342

(57) **Abstract**

The present disclosure provides a doorsill area identification method, a doorsill area identification apparatus, a computer-readable storage medium, and an electronic device. The method comprises: on the basis of escape information from the cleaning process of a cleaning robot, determining a first area of easy entrapment; determining a first area of easy entrapment having a continuous obstacle of a preset height as a second area of easy entrapment; and according to the second area of easy entrapment and information of a room map in which the second area of easy entrapment is located, determining whether the second area of easy entrapment is a doorsill area. The method may identify a doorsill area in a cleaning area.

## Description

### CROSS-REFERENCE TO RELATED APPLICATION

The present application claims **priority** to the Chinese patent application No. 202211436872.3 filed on November 16, 2022, and the entire contents of this Chinese patent application are incorporated herein by reference.

### TECHNICAL FIELD

The present disclosure relates to the field of smart homes, in particular to a doorsill area identification method, a doorsill area identification apparatus, a computer-readable storage medium and an electronic device.

### BACKGROUND ART

In recent years, with the rapid development of computer technologies and artificial intelligence science, an intelligent robot technology has gradually become a hot spot in the field of modern robot research. As the most practical type of intelligent robot, cleaning robots can automatically complete the cleaning work of the ground with a certain degree of artificial intelligence.

At present, cleaning robots are prone to jamming in some doorsill areas during the cleaning process, which leads to prolonged sweeping time and poor sweeping effect.

In order to perform special treatments on the doorsill area during the sweeping process, it is important to first identify the doorsill area.

### SUMMARY OF THE INVENTION

An objective of the present disclosure is to provide a doorsill area identification method, a doorsill area identification apparatus, a computer-readable storage medium and an electronic device to identify a doorsill area in a cleaning area.

According to a specific embodiment of the present disclosure, in a first aspect, a doorsill area identification method is provided. The method includes: determining a first jam-prone area based on escape information of a cleaning robot during a sweeping process; determining the first jam-prone area where a continuous obstacle with a preset height exists as a second jam-prone area; and judging whether the second jam-prone area is a doorsill area based on the second jam-prone area and map information of a room where the second jam-prone area is located.

In an exemplary embodiment of the present disclosure, the determining the first jam-prone area based on the escape information of the cleaning robot during the sweeping process includes: acquiring a trigger position that triggers the cleaning robot to perform a preset escape action during the sweeping process of the cleaning robot; and determining the first jam-prone area based on the trigger position.

In an exemplary embodiment of the present disclosure, the determining the first jam-prone area based on the trigger position includes: in the event of a single trigger position, determining a trigger area within a preset range in which the trigger position is located as the first jam-prone area; and in the event of a plurality of trigger positions, clustering the plurality of trigger areas corresponding to the plurality of trigger positions to obtain at least one of the first jam-prone areas.

In an exemplary embodiment of the present disclosure, the clustering the plurality of trigger areas corresponding to the plurality of trigger positions to obtain at least one of the first jam-prone areas includes: clustering the plurality of trigger areas according to mutual distances between the plurality of trigger positions to obtain the first jam-prone area.

In an exemplary embodiment of the present disclosure, the preset range is a range within 50 cm from the trigger position.

In an exemplary embodiment of the present disclosure, the preset escape action is an escape action triggered after the cleaning robot slips.

In an exemplary embodiment of the present disclosure, the determining the first jam-prone area where the continuous obstacle with the preset height is located as the second jam-prone area includes: acquiring obstacle height information in the first jam-prone area; determining whether there is a continuous obstacle that meets the preset height in the first jam-prone area based on the obstacle height information; and if yes, determining the first jam-prone area as the second jam-prone area.

In an exemplary embodiment of the present disclosure, the preset height is between 1.5 cm and 2 cm.

In an exemplary embodiment of the present disclosure, the judging whether the second jam-prone area is the doorsill area based on the second jam-prone area and the map information of the room where the second jam-prone area is located includes: selecting a preset number of sampling points in the second jam-prone area; acquiring the nearest obstacle distance information of the sampling points in the room map based on the room map information; and judging whether the second jam-prone area is the doorsill area based on the nearest obstacle distance information.

In an exemplary embodiment of the present disclosure, the acquiring the nearest obstacle distance information of the sampling points in the room map based on the room map information includes: acquiring the nearest obstacle distance of each of the sampling points in all directions by taking, on the room map, the sampling point as a starting point to form the nearest obstacle distance information.

In an exemplary embodiment of the present disclosure, the judging whether the second jam-prone area is the doorsill area based on the nearest obstacle distance information includes: identifying the nearest obstacle distance information by using a neural network classifier to determine whether the second jam-prone area is the doorsill area, wherein the neural network classifier is obtained by training the nearest obstacle distance training information.

In an exemplary embodiment of the present disclosure, the method further includes: in the process of judging whether the second jam-prone area is the doorsill area using the plurality of pieces of nearest obstacle distance information acquired based on the preset number of the sampling points, determining the second jam-prone area as the doorsill area as long as the nearest obstacle distance information corresponding to any one of the sampling points indicates that the second jam-prone area is the doorsill area.

In an exemplary embodiment of the present disclosure, the preset number is between 8 and 10.

In a second aspect, the present disclosure provides a doorsill area identification apparatus. The apparatus includes: a first jam-prone area determining module configured to determine a first jam-prone area based on escape information of a cleaning robot during a sweeping process; a second jam-prone area determining module configured to determine the first jam-prone area where a continuous obstacle with a preset height exists as a second jam-prone area; and a doorsill area judging module configured to judge whether the second jam-prone area is a doorsill area based on the second jam-prone area and map information of a room where the second jam-prone area is located.

In a third aspect, the present disclosure provides a computer-readable storage medium configured to store a computer program thereon. The computer program which, when executed by a processor, implements the above doorsill area identification method.

In a fourth aspect, the present disclosure provides an electronic device. The electronic device includes a processor; and a memory configured to store executable instructions of the processor. The processor is configured to execute the above doorsill area identification method by executing the executable instructions.

According to the doorsill area identification method provided by the exemplary embodiments of the present disclosure, potential doorsill areas in a sweeping area may be initially determined by acquiring escape information during a sweeping process of a cleaning robot and determining first jam-prone areas based on the escape information; next, an area where the continuous obstacle with the preset height exists is determined as a second jam-prone area among the determined first jam-prone areas, namely, a potential doorsill area with the specific height is further determined as a to-be-determined area; and finally, whether the second jam-prone area is a doorsill area can be judged by combining the second jam-prone area with map information of a room where the second jam-prone area is located. In other words, during the doorsill area identification process, combing the continuous obstacle information with the escape information can improve the accuracy of doorsill area determination. In addition, doorsill-like areas not located at a doorway can be identified based on the map information of the room, thereby providing sufficient doorsill area information to improve subsequent sweeping efficiency.

### BRIEF DESCRIPTION OF THE DRAWINGS

The accompanying drawings here are incorporated in the Description and constitute a part of the Description, show embodiments conforming to the present disclosure, and are used together with the Description to explain the principles of the present disclosure. Apparently, the accompanying drawings in the following description show only some embodiments of the present disclosure, and a person of ordinary skill in the art may still derive other drawings from these accompanying drawings without creative efforts. In the accompanying drawings:
FIG. 1 shows a flowchart of a doorsill area identification method provided by an exemplary embodiment of the present disclosure;
FIG. 2 shows a schematic diagram of trigger positions in a room map provided by an exemplary embodiment of the present disclosure;
FIG. 3 shows a flowchart of a method for determining a doorsill area by using nearest obstacle distance information provided by an exemplary embodiment of the present disclosure;
FIG. 4 shows a schematic diagram of determining a nearest obstacle distance by taking a sampling point as the center in a room map provided by an exemplary embodiment of the present disclosure;
FIGs. 5A and 5B show nearest obstacle positions acquired based on two different sampling points determined in the room map shown in FIG. 4;
FIG. 6 shows a flowchart of operation steps of a doorsill area identification method provided by an exemplary embodiment of the present disclosure;
FIG. 7 shows a block diagram of a doorsill area identification apparatus provided by an exemplary embodiment of the present disclosure; and
FIG. 8 shows a schematic diagram of modules of an electronic device provided by an exemplary embodiment of the present disclosure.

### DETAILED DESCRIPTION

To make the objectives, technical solutions and advantages of the present disclosure clearer, the following provides a detailed description of the present disclosure in conjunction with the accompanying drawings. It should be understood that the described embodiments are only a part of the embodiments of the present disclosure, rather than all of them. All other embodiments obtained by those of ordinary skill in the art based on the embodiments of the present disclosure without creative efforts shall fall within the protection scope of the present disclosure.

The terminology used in the embodiments of the present disclosure is for the purpose of describing particular embodiments only and is not intended to limit the present disclosure. As used in the embodiments of the present disclosure and the appended claims, the singular forms "a", "an" and "the" are intended to include plural referents unless the context clearly indicates otherwise. The term "a plurality of" generally includes at least two.

It should be understood that the term "and/or" used herein merely describes an associative relationship between related objects, indicating three possible scenarios. For example, "A and/or B" may represent: A exists alone, A and B exist concurrently, or B exists alone. Additionally, the character "/" in this document generally signifies an "or" relationship between the preceding and following associated objects.

It should be understood that although terms such as "first", "second" and "third" may be used in the embodiments of the present disclosure to describe certain elements, these elements should not be limited by these terms. These terms are only used to distinguish one described element from another. For example, without departing from the scope of the embodiments of the present disclosure, a "first" element may also be referred to as a "second" element, and similarly, a "second" element may be referred to as a "first" element.

Depending on the context, the word "if" as used herein may be interpreted as "when" or "in response to determining" or "in response to detecting". Similarly, depending on the context, the phrases "if it is determined that" or "if it is detected that (the stated condition or event)" may be interpreted as "when it is determined that" or "in response to determining" or "when it is detected that (the stated condition or event)" or "in response to detecting (the stated condition or event)".

Furthermore, it should be noted that the terms "comprising", "including" or any variations thereof are intended to cover non-exclusive inclusion. This means that an commodity or apparatus including a series of elements not only includes those explicitly listed but may also encompass other unlisted elements or inherent elements of such a commodity or apparatus. Unless further limited, an element defined by the phrase "comprising a ..." does not preclude the existence of additional identical elements in the commodity or apparatus that includes said elements.

A cleaning robot belongs to a type of smart home appliances configured with artificial intelligence that can automatically complete a floor cleaning task in a room. It generally employs brush sweeping and vacuum manners to first suck debris on the ground into its built-in dustbin, thereby completing a floor cleaning function.

However, during a sweeping process, in the event of encountering a doorsill area, the cleaning robot may often fail to cross the doorsill area due to external interference and other reasons, resulting in missed sweeping. Alternatively, repeated back-and-forth traversals across the doorsill area according to a sweeping path prolong the sweeping time of the doorsill area during sweeping, ultimately degrading a sweeping effect.

Therefore, implementing special treatments to the doorsill area during the sweeping process, such as reducing the passing frequency or slowing down the passing speed, can mitigate the above issues. Nevertheless, determining the doorsill area first is also a critical step prior to performing the above treatments.

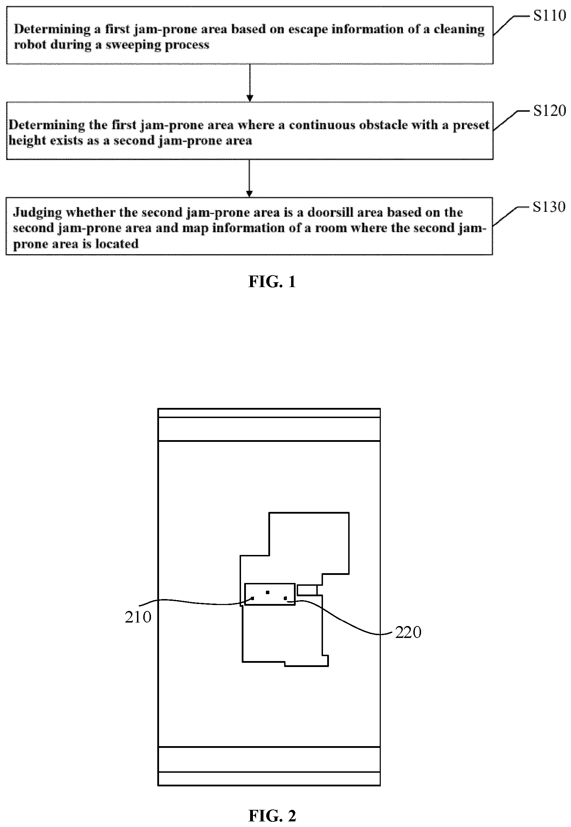

Based on this, an exemplary embodiment of the present disclosure provides a doorsill area identification method. The method is applicable to a cleaning robot which can implement the method through hardware and/or software. Referring to FIG. 1, a flowchart of the doorsill area identification method provided by the exemplary embodiment of the present disclosure is shown. The doorsill area identification method may include the following steps S110, S120, and S130.

In S110, a first jam-prone area is determined based on escape information of a cleaning robot during a sweeping process.

In S120, the first jam-prone area where a continuous obstacle with a preset height exists is determined as a second jam-prone area.

In S130, whether the second jam-prone area is a doorsill area is judged based on the second jam-prone area and map information of a room where the second jam-prone area is located.

According to the doorsill area identification method provided by the exemplary embodiment of the present disclosure, potential doorsill areas in a sweeping area may be determined initially by acquiring escape information during a sweeping process of the cleaning robot and determining the first jam-prone areas based on the escape information; next, an area where the continuous obstacle with the preset height exists is determined as the second jam-prone area among the determined first jam-prone areas, namely, the potential doorsill area with the specific height is determined as a to-be-determined area; and finally, whether the second jam-prone area is a doorsill area may be determined by combining the second jam-prone area with the map information of the room where the second jam-prone area is located. In other words, during the doorsill area identification process, combing the continuous obstacle information with the escape information can improve the accuracy of doorsill area determination. In addition, doorsill-like areas not located at a doorway can be identified based on the map information of the room, thereby providing sufficient doorsill area information to improve subsequent sweeping efficiency.

Thus, it can be seen that the doorsill area identification method provided by the exemplary embodiment of the present disclosure can identify not only the doorsill areas located at the doorway but also the doorsill-like areas not located at the doorway. Since such doorsill-like areas similarly affect the sweeping effect as the doorsill areas, the cleaning robot can perform specialized cleaning treatments on both the doorsill areas and the doorsill-like areas according to the actual needs to improve the sweeping efficiency.

The following will enumerate the specific implementation manners to elaborate each step of the doorsill area identification method provided by the exemplary embodiment of the present disclosure.

In S110, a first jam-prone area is determined based on escape information of a cleaning robot during a sweeping process.

Under normal conditions, when the cleaning robot encounters jamming positions and the like during the actual sweeping operation process, an escape action is triggered to help the cleaning robot smoothly pass through these jamming positions via the escape action. In practical applications, the escape action may take various forms, such as gear shifting up or speed reduction.

In the exemplary embodiment of the present disclosure, a preset escape action is predefined. If the cleaning robot triggers the preset escape action during the sweeping process, the trigger position that triggers the cleaning robot to execute the preset escape action can be acquired, and the first jam-prone area is determined based on the trigger position.

In other words, the exemplary embodiment of the present disclosure sets the preset escape action for determining the doorsill areas. Only when the cleaning robot triggers this escape action, the corresponding positions are collected and acquired to exclude escape scenarios caused by other situations (e.g., the escape action triggered in the event of encountering an obstacle), thereby excluding an area where the obstacle is located from the potential doorsill areas.

In the exemplary embodiment of the present disclosure, the preset escape action may be an escape action triggered after the cleaning robot slips. Particularly, it may be an escape action triggered by forward slipping or an escape action triggered by backward slipping.

The escape action triggered by the forward slipping primarily occurs when the cleaning robot passes through a doorsill area such as a doorsill stone, where two wheels of the cleaning robot are jammed at the doorsill area position and slip. The slipping state may be judged through data from Odom (odometry), Gyro (gyroscope), Laser (radar data), SLAM (simultaneous localization and mapping), and the like. Existing slipping state judgement methods can be applied here, and detailed judgement processes are not reiterated herein.

When the cleaning robot slips in the forward process, it will trigger a special escape action. This special escape action may particularly include: controlling the cleaning robot to reverse by a certain distance and attempt to bypass the slipping position via an arc-shaped path. After the slipping state is released, the robot's orientation is adjusted to its orientation before triggering the special escape action. If the slipping state persists, the above reversing and bypassing actions are repeated continuously.

The above bypassing the slipping position via the arc-shaped path may include: controlling a path to enable the cleaning robot to move left-front first and then right-front (in this case, a wall is located on the right side of the cleaning robot); when the wall is located on the left side of the cleaning robot, controlling the cleaning robot to move right-front first and then left-front; and if no wall is near the slipping position, randomly setting the sequence of the above two movement actions, that is, either left-front followed by right-front or right-front followed by left-front is acceptable.

If the above actions of reversing and bypassing via the arc-shaped path remains ineffective in releasing the slipping state, the cleaning robot is enabled to reverse by means of direct control of PWM (pulse width modulation, pulse width modulation) signals of wheels of the cleaning robot; then, the cleaning robot rotates successively around the left wheel and the right wheel respectively as the center; and after the rotation, the cleaning robot is controlled to move forward to get out of the slipping position.

If the cleaning robot remains ineffective in getting out of the slipping state after executing the above special escape action, the slipping position is marked, and the cleaning robot is set to avoid sweeping this position in a subsequent sweeping process, thereby preventing difficulty in escaping.

In addition, the escape action triggered by backward slipping is an escape action primarily executed when the cleaning robot slips while reversing from a doorsill area such as a doorsill stone. For example, since the front side of the cleaning robot is lifted and a mop presses against the ground, the wheels slip. In this case, the cleaning robot attempts to reverse or rotate, and triggers another special escape action.

This special escape action may include: first reversing, and then performing clockwise and counterclockwise in-place rotation to release the slipping state; or enabling the cleaning robot to move in rear-right and left-rear directions by means of direct control of PWM signals of the wheels, and repeating this action until the slipping state is released; or enabling the cleaning robot to rotate clockwise and counterclockwise by means of direct control of the PWM signals of the wheels to release the slipping state.

If the cleaning robot still fails to release the slipping state after executing the above special escape action, the slipping position is marked, and the cleaning robot is set to avoid sweeping this position in a subsequent sweeping process, thereby preventing difficulty in escaping.

In the exemplary embodiment of the present disclosure, both the special escape action triggered by forward slipping and the special escape action triggered by backward slipping are determined as the above preset escape actions.

In the exemplary embodiment of the present disclosure, after the cleaning robot triggers the above preset escape action, it is required to acquire a trigger position where the cleaning robot executes the preset escape action. After the trigger position is acquired, the acquired trigger position may be marked on a room map, and a black dot in the room map as shown in FIG. 2 is the acquired trigger position 210.

During actual sweeping processes, there may be a plurality of positions where the cleaning robot triggers the above preset escape action. In other words, a plurality of trigger positions may be acquired. These trigger positions may be in the same doorsill area or in a plurality of doorsill areas.

Therefore, in the exemplary embodiment of the present disclosure, in the event of acquiring a plurality of trigger positions, the plurality of trigger areas corresponding to the plurality of trigger positions may be clustered to obtain at least one first jam-prone area.

Typically, the acquired trigger position is a single point, and its corresponding trigger area may be a small area centered around the trigger position. The shape of this small area may be circular, square, etc., which is not specifically limited in the exemplary embodiment of the present disclosure.

In practical applications, there are various clustering methods for clustering the plurality of trigger areas corresponding to the plurality of trigger positions. In the exemplary embodiment of the present disclosure, clustering on the plurality of trigger areas is primarily performed based on mutual distances between the plurality of trigger positions to obtain the above first jam-prone area.

For example, as shown in FIG. 2, there are three black dots in the room map, all of which represent three different trigger positions 210; and if the mutual distances between these three trigger positions 210 are within a preset range, trigger areas corresponding to these three trigger positions 210 may be clustered into one first jam-prone area 220. Alternatively, trigger areas corresponding to two of the trigger positions 210 whose mutual distance is within the preset range are clustered to obtain a first clustering area; then, whether the distance between the third trigger position 210 and the first clustering area is within the preset range is determined, and if yes, the trigger area corresponding to the third trigger position 210 is merged into the first clustering area to obtain a second clustering area; and if additional trigger positions exist, the additional trigger positions are clustered one by one according to the above manner until no trigger positions remain or trigger positions fall outside the preset range, thereby obtaining the first jam-prone area 220.

In practical applications, the above preset range may be determined based on actual situations. For example, the preset range may be a range within 50 cm from the trigger position. The specific value of the preset range may not be specifically limited in the exemplary embodiment of the present disclosure.

It should be noted that in practical applications, there may be only one trigger position. In such cases, it is only necessary to determine the preset trigger area within the preset range where the trigger position is located as the first jam-prone area.

In S120, the first jam-prone area where a continuous obstacle with a preset height exists is determined as a second jam-prone area.

In the exemplary embodiment of the present disclosure, after the first jam-prone area is determined, it is further required to judge whether a continuous obstacle that meets the preset height exists in the first jam-prone area, so as to judge whether the first jam-prone area is a potential doorsill area, i.e., the second jam-prone area.

Particularly, judging whether the continuous obstacle that meets the preset height exists in the first jam-prone area includes: first, acquiring obstacle height information in the first jam-prone area; then, determining whether there is a continuous obstacle that meets the preset height in the first jam-prone area based on the obstacle height information; if yes, determining the first j am-prone area as the second j am-prone area; or if not, disregarding the first j am-prone area.

**In** practical applications, a doorsill area is typically an area elevated relative to the ground. Therefore, in the case of acquiring the obstacle height information, height information of all positions in the first jam-prone area may be acquired and statistically analyzed to determine whether there is a continuous position where the height exceeds the preset height; and if yes, the continuous position is determined as a continuous obstacle. The length of such continuous obstacle must exceed a specific length, e.g., greater than 50 cm, etc.

**In** addition, the preset height may be set based on actual situations. For example, the preset height may be between 1.5 cm and 2 cm. The preset height may not be specifically limited in the exemplary embodiment of the present disclosure.

**In** S130, whether the second jam-prone area is a doorsill area is judged based on the second jam-prone area and map information of a room where the second jam-prone area is located.

**In** the exemplary embodiment of the present disclosure, after the second jam-prone area is determined, it is required to determine whether the second jam-prone area is a doorsill area.

**In** practical applications, there are various methods to judge whether the second jam-prone area is a doorsill area, such as directly judging whether the second jam-prone area is a doorsill area based on the position of the second jam-prone area in the room map. However, such a judgment method involves larger information content, resulting in higher computational load.

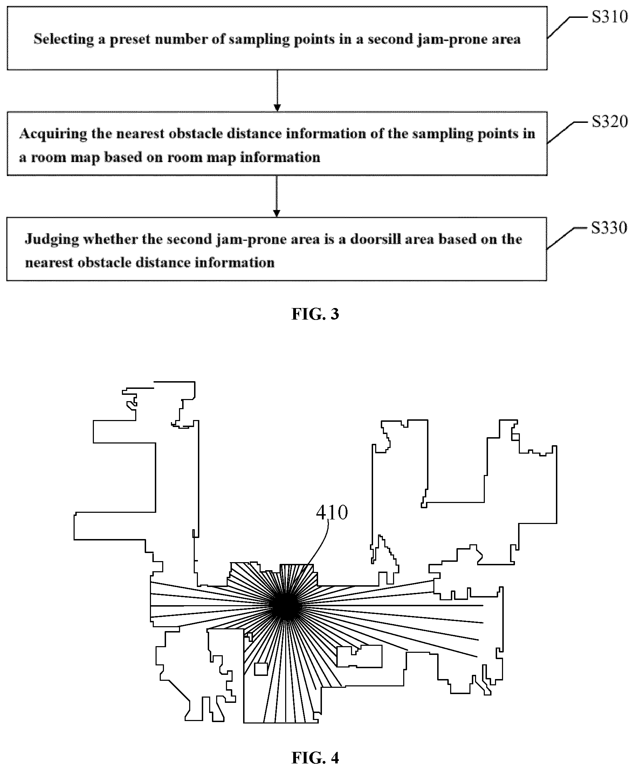

Based on this, an exemplary embodiment of the present disclosure provides a method for determining doorsill areas using nearest obstacle distance information. Referring to FIG. 3, the method particularly includes the following steps S310, S320, and S330.

**In** S310, a preset number of sampling points are selected in the second jam-prone area.

**In** practical applications, a sampling point at any position may be selected in the second jam-prone area. In the exemplary embodiment of the present disclosure, to improve the judgment accuracy, a sampling point where the distance to the nearest obstacle exceeds a preset length may be selected, wherein the preset length may be 5 cm or the like, and the specific value of the preset length is not specifically limited herein.

The number of the sampling points, i.e., the preset number, may be any number. In the exemplary embodiment of the present disclosure, the preset number may be 8 to 10.

**In** S320, the nearest obstacle distance information of the sampling points is acquired based on the room map information.

**In** the exemplary embodiment of the present disclosure, after the sampling points are determined, the nearest obstacle distances of each of the sampling points in all directions may be acquired by taking, on the room map where the second jam-prone area is located, the sampling point as a starting point to form the nearest obstacle distance information. Referring to FIG. 4, a schematic diagram of determining the nearest obstacle distance by taking a sampling point 410 as the center in a room map is shown.

In practical applications, LiDAR simulation may be performed at each sampling point by emitting laser in directions from 0 degree (directly right) to 359 degrees (for clarity, FIG. 4 shows sampling directions at an interval of 5 degrees) to obtain geographic spatial information of an area near the sampling point. When the laser is blocked by an obstacle, the length from the sampling point to the obstacle is acquired as the nearest obstacle distance. Thus, there is one nearest obstacle distance in each direction within 360 degrees. If the laser does not encounter an obstacle in a specific direction, the nearest obstacle distance in that direction is determined as "none" or a preset maximum distance.

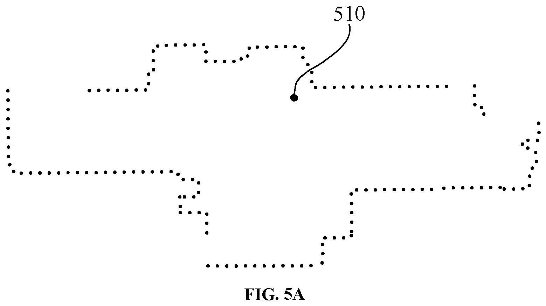

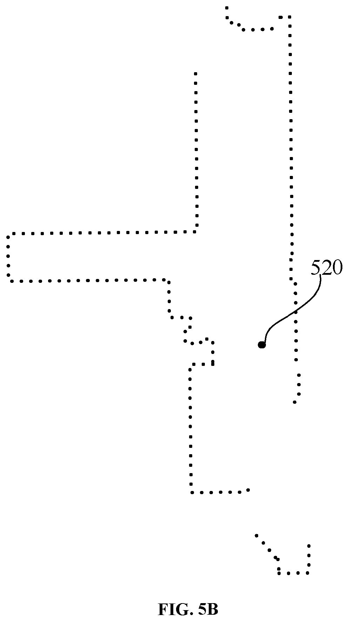

Referring to FIGs. 5A and 5B, schematic diagrams of nearest obstacle positions acquired based on two different sampling points in the room map shown in FIG. 4 are shown. The nearest obstacle is marked as a point, and the distance from this point to the sampling point is the nearest obstacle distance. A sampling point 510 in FIG. 5A and a sampling point 520 in FIG. 5B are different sampling points in the second jam-prone area, wherein the sampling point 520 in FIG. 5B is closer to an actual doorsill. Different judgment results may be acquired based on the nearest obstacle distance information corresponding to different sampling points.

In S330, whether the second jam-prone area is a doorsill area is judged based on the nearest obstacle distance information.

In the exemplary embodiment of the present disclosure, after the nearest obstacle distance information is acquired, the doorsill area can be judged based on the nearest obstacle distance information. The laser information obtained from each sampling point is a 360-dimensional feature vector, in which each dimension represents the nearest obstacle distance in one direction. The distance information includes spatial information near the sampling point (including the shape of the room, the position of the obstacle, etc.), which includes information required to judge whether the sampling point is at a doorsill. However, these pieces of information are not explicitly presented and thus difficult to extract and judge intuitively. In a deep learning technology, feature extraction rules are automatically fitted through a plurality of hidden layers (usually more than one layer) by observing countless feature vectors at both doorsill and non-doorsill points, and finally, an output layer outputs a numerical value (0 to 1) representing the probability that the sampling point is located at the doorsill.

Therefore, in practical applications, a neural network classifier is used to identify the nearest obstacle distance information to determine whether the second jam-prone area is a doorsill area. The neural network classifier needs to be obtained by data training, which may be particularly obtained by training the nearest obstacle distance training information. The exemplary embodiment of the present disclosure will not repeat the particular training process.

After the trained neural network classifier is acquired, the nearest obstacle distance information obtained from different sampling points may be identified. Particularly, the nearest obstacle distance information corresponding to each sampling point is input into the neural network classifier. For example, the nearest obstacle position maps obtained in FIGs. 5A and 5B are input into the neural network classifier for identification. It should be noted that the information input into the classifier needs to be consistent with the information during training. Finally, the neural network classifier outputs a result of indicating whether the second jam-prone area where the sampling point is located is the doorsill area.

In practical applications, the results determined based on the nearest obstacle distance information obtained from different sampling points in the same second jam-prone area may be different, and whether the second jam-prone area is the doorsill area may be determined based on a specific proportion. For example, if the judgment results corresponding to more than 60% of the sampling points is YES, the second jam-prone area is determined as the doorsill area. Alternatively, if the nearest obstacle distance information corresponding to any one of the sampling points indicates that the second jam-prone area is the doorsill area, the second jam-prone area is determined as the doorsill area. The exemplary embodiment of the present disclosure does not limit the particular judgment proportion.

According to the doorsill area identification method provided by the exemplary embodiment of the present disclosure, in one aspect, in the process of identifying the doorsill area, the accuracy of doorsill area determination can be improved by combining the continuous obstacle information with the escape information, and a doorsill-like area not located at a doorway can be identified, thereby providing sufficient doorsill area information to improve subsequent sweeping efficiency; and in the other aspect, in the process of judging whether the second jam-prone area is the doorsill area, the information volume in the identification process can be reduced by using the nearest obstacle distance information, thereby reducing the computational load in the identification process and improving the computational efficiency.

Finally, after the doorsill area is determined, the doorsill area can be transmitted to an APP of a user terminal, where the doorsill area is displayed in the room map to inform the user that there is a doorsill area in this region, so that the subsequent sweeping strategy can be optimized to improve the sweeping efficiency.

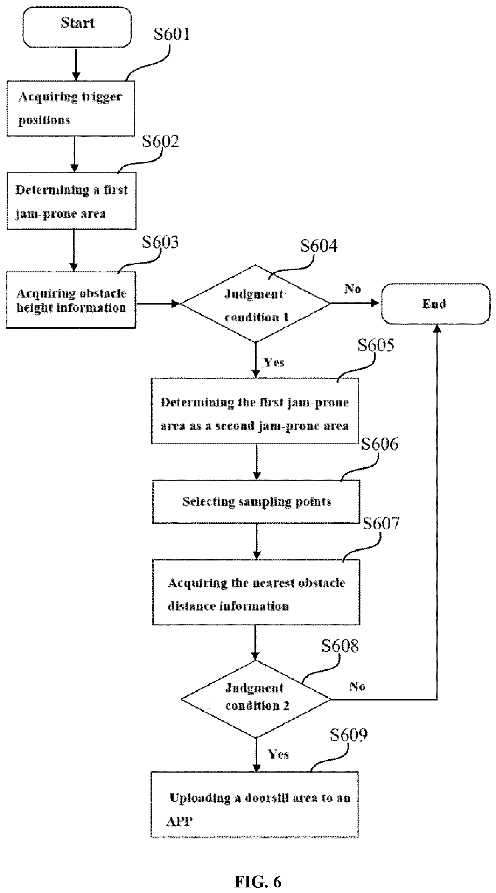

Referring to FIG. 6, a flowchart of operation steps of a doorsill area identification method provided by an exemplary embodiment of the present disclosure is shown. In FIG. 6, in S601, when a cleaning robot is triggered to execute a preset escape action, trigger positions are acquired. Next, S602 is performed to cluster the trigger positions to determine a first jam-prone area. S603 is performed to acquire obstacle height information in the first jam-prone area. S604 is performed, that is, a judgment condition 1 is satisfied to determine whether a continuous obstacle meeting the preset height exists; if yes, S605 is performed to determine the first jam-prone area as a second jam-prone area; or if no, the process ends.

Following S605, S606 is performed to select a preset number of sampling points (abbreviated as "sampling point selection") in the second jam-prone area. S607 is performed to acquire the nearest obstacle distance information corresponding to the sampling points. S608 is performed, that is, conditional judgment 2 is performed to judge whether the second jam-prone area is a doorsill area based on the nearest obstacle distance information; if yes, S609 is performed to upload the doorsill area to the APP; or if no, the process ends.

It should be noted that although steps of the method provided by the present disclosure are described in the accompany drawings according to a particular order, it does not require or imply that these steps must be executed in accordance with the specific order or a desired result cannot be realized until all shown steps are executed. Additionally or alternatively, some steps may be omitted, a plurality of steps may be integrated into one step to be performed, and/or a step may be divided into a plurality of steps for execution.

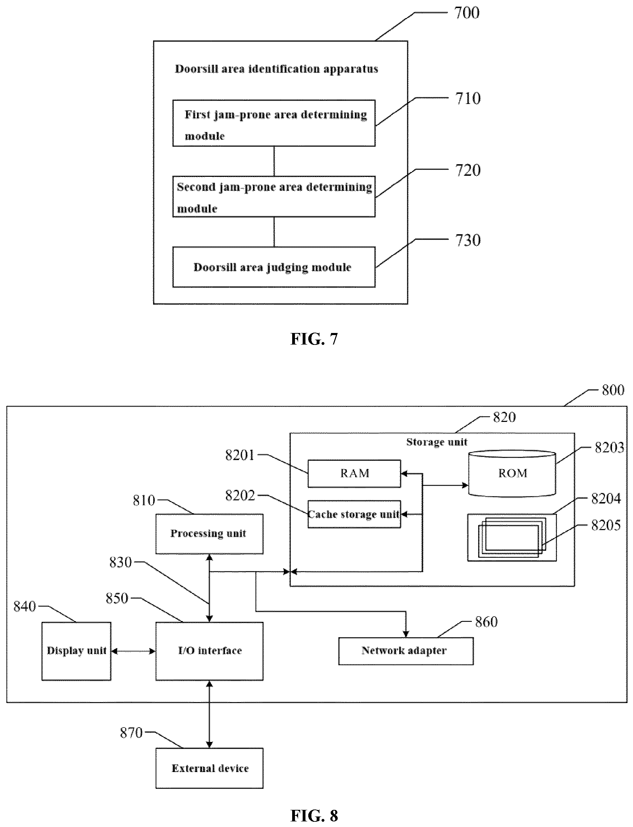

In an exemplary embodiment of the present disclosure, a doorsill area identification apparatus is further provided. As shown in FIG. 7, the doorsill area identification apparatus 700 may include a first jam-prone area determining module 710, a second jam-prone area determining module 720 and a doorsill area judging module 730.

The first jam-prone area determining module 710 is configured to determine a first jam-prone area based on escape information of a cleaning robot during a sweeping process;
the second jam-prone area determining module 720 is configured to determine the first jam-prone area where a continuous obstacle with a preset height exists as a second jam-prone area; and
the doorsill area judging module 730 is configured to judge whether the second jam-prone area is a doorsill area based on the second jam-prone area and map information of a room where the second jam-prone area is located.

In an exemplary embodiment of the present disclosure, the first jam-prone area determining module 710 is configured to acquire a trigger position that triggers the cleaning robot to perform a preset escape action during the sweeping process of the cleaning robot, and determine the first jam-prone area based on the trigger position.

In an exemplary embodiment of the present disclosure, the first jam-prone area determining module 710 is configured to, in the event of a single trigger position, determine a trigger area within a preset range in which the trigger position is located as the first jam-prone area; and in the event of a plurality of trigger positions, cluster a plurality of trigger areas corresponding to the plurality of trigger positions to obtain at least one first jam-prone area.

In an exemplary embodiment of the present disclosure, the first jam-prone area determining module 710 is configured to cluster the plurality of trigger areas according to mutual distances between the plurality of trigger positions to obtain the first jam-prone area.

In an exemplary embodiment of the present disclosure, the preset range is a range within 50 cm from the trigger position.

In an exemplary embodiment of the present disclosure, the preset escape action is an escape action triggered after the cleaning robot slips.

In an exemplary embodiment of the present disclosure, the second jam-prone area determining module 720 is configured to: acquire obstacle height information in the first jam-prone area; determine whether there is a continuous obstacle that meets the preset height in the first jam-prone area based on the obstacle height information; and if yes, determine the first jam-prone area as the second jam-prone area.

In an exemplary embodiment of the present disclosure, the preset height is between 1.5 cm and 2 cm.

In an exemplary embodiment of the present disclosure, the doorsill area judging module 730 is configured to: select a preset number of sampling points in the second jam-prone area; acquire nearest obstacle distance information of the sampling points in the room map based on the room map information; and judge whether the second jam-prone area is the doorsill area based on the nearest obstacle distance information.

In the exemplary embodiment of the present disclosure, the doorsill area judging module 730 is configured to acquire the nearest obstacle distance of each of the sampling points in all directions by taking, on the room map, the sampling point as a starting point to form the nearest obstacle distance information.

In an exemplary embodiment of the present disclosure, the doorsill area judging module 730 is configured to identify the nearest obstacle distance information by using a neural network classifier to determine whether the second jam-prone area is the doorsill area, wherein the neural network classifier is obtained by training the nearest obstacle distance training information.

In an exemplary embodiment of the present disclosure, the doorsill area judging module 730 is configured to, in the process of judging whether the second jam-prone area is the doorsill area using a plurality of pieces of nearest obstacle distance information acquired based on the preset number of the sampling points, determine the second jam-prone area as the doorsill area as long as the nearest obstacle distance information corresponding to any one of the sampling points indicates that the second jam-prone area is the doorsill area.

In an exemplary embodiment of the present disclosure, the preset number is between 8 and 10.

The specific details of the modules in the above doorsill area identification apparatus have been thoroughly detailed in the corresponding doorsill area identification method, and are therefore not reiterated herein.

It should be noted that although several modules or units of the device for action execution are mentioned in the above detailed description, this division is not mandatory. Actually, according to the embodiments of the present disclosure, the features and functions of two or more modules or units described above may be embodied in one module or unit. On the contrary, the feature and function of one module or unit described above can be further divided into a plurality of modules or units to be embodied.

In an exemplary embodiment of the present disclosure, an electronic device capable of implementing the above method is also provided. For example, the electronic device may be a cleaning robot capable of implementing the above method.

Those skilled in the art can understand that various aspects of the present disclosure can be implemented as systems, methods or program products. Therefore, various aspects of the present disclosure can be implemented as hardware only, software (including firmware, microcode, etc.) only, or a combination of hardware and software, which can be collectively referred to as "circuit", "module" or "system" here.

An electronic device 800 according to an embodiment of the present disclosure is described below with reference to FIG. 8. The electronic device 800 shown in FIG. 8 is merely an example and should not impose any limitations on the functionality or scope of use of embodiments of the present disclosure.

As shown in FIG. 8, the electronic device 800 is represented in the form of a general-purpose computing device. Components of the electronic device 800 may include, but are not limited to, at least one processing unit 810 described above, at least one storage unit 820 described above, a bus 830 connecting different system components including the storage unit 820 and the processing unit 810, and a display unit 840.

The storage unit 820 stores program codes executable by the processing unit 810, such that the processing unit 810 performs the steps according to various exemplary embodiments of the present disclosure described in the above-mentioned "exemplary method" section of the present Description. For example, the processing unit 810 may execute steps as shown in FIG. 1 and FIG. 3.

The storage unit 820 may include a readable medium in the form of a volatile storage unit, such as a random access memory (RAM) 8201 and/or a cache storage unit 8202, and may further include a read-only memory (ROM) 8203.

The storage unit 820 may further include a program/utility tool 8204 with a set of (at least one) program modules 8205. Such program modules 8205 include, but are not limited to, an operating system, one or more application programs, other program modules and program data, and each or some combinations of these examples may include the implementation of a network environment.

The bus 830 may represent one or more of several types of bus structures, including a memory cell bus or a memory cell controller, a peripheral bus, an accelerated graphics port, a processing unit, or a local bus using any of a variety of bus structures.

The electronic device 800 may also communicate with at least one external device 870 (such as a keyboard, a pointing device, and a Bluetooth device), and may also communicate with at least one device that enable(s) a user to interact with the electronic device 800, and/or communicate with any device (such as a router, or a modem) that enables the electronic device 800 to communicate with at least one other computing device. This communication may be performed via an input/output (I/O) interface 850. In addition, the electronic device 800 may also communicate with at least one network (for example, a local area network (LAN), a wide area network (WAN) and/or a public network, e.g., the Internet) via a network adapter 860. As shown in the figure, the network adapter 860 communicates with other modules of the electronic device 800 via the bus 830. It should be understood that although not shown in the figure, other hardware and/or software modules may be used in conjunction with the electronic device 800, including but not limited to: microcode, device drivers, redundant processing units, external disk drive arrays, and redundant arrays of independent disks (RAID) systems, tape drives, and data backup storage systems.

Through the descriptions of the above embodiments, it is easy for those skilled in the art to understand that the exemplary embodiments described herein can be implemented by software or a combination of software and necessary hardware. Therefore, the technical solution according to the embodiment of the present disclosure can be embodied in the form of a software product. The software product can be stored in a non-volatile storage medium (a CD-ROM, a USB flash drive, a mobile hard disk, etc.) or on the network, and includes several instructions to make a computing device (which may be a personal computer, a server, a terminal apparatus, a network device, or the like) execute the method according to the embodiment of the present disclosure.

In an exemplary embodiment of the present disclosure, there is further provided a computer-readable storage medium having stored thereon a program product capable of implementing the above-described method of the present Description. In some possible embodiments, various aspects of the present disclosure may also be implemented in the form of a program product including program codes which, when the program product runs on a terminal device, cause the terminal device to execute the steps according to various exemplary embodiments of the present disclosure described in the above "Exemplary Method" section of the present Description.

A program product for implementing the above method according to an embodiment of the present disclosure may be in the form of a portable compact disk read-only memory (CD-ROM) and include program codes, and may run on a terminal device such as a personal computer. However, the program product of the present disclosure is not limited thereto, and in this document, the readable storage medium may be any tangible medium which contains or stores a program, and the program may be used by or in combination with an instruction execution system, apparatus or device.

The program product may be any combination of one or more readable media. The readable medium may be a readable signal medium or a readable storage medium. The readable storage medium may be, for example, but not limited to, an electrical, magnetic, optical, electromagnetic, infrared, or semiconductor system, apparatus or device, or any combination of the above. More specific examples (a non-exhaustive list) of the readable storage medium may include: an electrical connection with one or more wires, a portable disk, a hard disk, a random-access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

The computer-readable signal medium may include a data signal propagated in a baseband or as part of a carrier wave, and readable program codes are carried in the data signal. This propagated data signal may be in many forms, including but not limited to an electromagnetic signal, an optical signal, or any suitable combination of the above. The readable signal medium may also be any readable medium other than the readable storage medium, and the readable medium may send, propagate, or transmit the program for use by or in combination with an instruction execution system, apparatus or device.

The program code contained on the readable medium may be transmitted by any suitable medium, including, but not limited to: wireless, wired lines, optical cables, RF, etc., or any suitable combination of the above.

The program code for executing the operations of the present disclosure may be written in one programming language or any combination of a plurality of programming languages. The above programming languages include object-oriented programming languages, such as Java and C++, and also include conventional procedural programming languages, such as "C" language or similar programming languages. The program codes may execute entirely on a user computing device, partly on a user device, as an independent software package, partly on a user computing device and partly on a remote computing device, or entirely on a remote computing device or a server. In the case of the remote computing device, the remote computing device may be connected to the user computing device through any type of network, including a local area network (LAN) or wide area network (WAN), or may be connected to an external computing device (for example, via the Internet using an internet service provider).

In addition, the above drawings are merely schematic illustrations of the processing included in the method according to the exemplary embodiment of the present disclosure, and are not for limiting purposes. It is easy to understand that the processing shown in the above drawings do not indicate or limit the time sequence of these processing. In addition, it is also easy to understand that these processing can be performed synchronously or asynchronously in a plurality of modules, for example.

Other embodiments of the present disclosure will be apparent to those skilled in the art from consideration of the description and practice of the content disclosed herein. The present disclosure is intended to cover any variations, uses, or adaptations of the present disclosure following the general principles thereof and including common knowledge or commonly used technical measures which are not disclosed herein. The description and the embodiments are to be considered as exemplary only, with a true scope and spirit of the present disclosure indicated by the claims.

It should be appreciated that the present disclosure is not limited to the exact construction that has been described above and illustrated in the accompanying drawings, and that various modifications and changes can be made without departing from the scope of the present disclosure. It is intended that the scope of the present disclosure is only defined by the appended claims.

## Claims

1. A doorsill area identification method, comprising:
determining a first jam-prone area based on escape information of a cleaning robot during a sweeping process;
determining the first jam-prone area where a continuous obstacle with a preset height exists as a second jam-prone area; and
judging whether the second jam-prone area is a doorsill area based on the second jam-prone area and map information of a room where the second jam-prone area is located.

2. The method according to claim 1, wherein the determining the first jam-prone area based on the escape information of the cleaning robot during the sweeping process comprises:
acquiring a trigger position that triggers the cleaning robot to perform a preset escape action during the sweeping process of the cleaning robot; and
determining the first jam-prone area based on the trigger position.

3. The method according to claim 2, wherein the determining the first jam-prone area based on the trigger position comprises:
in the event of a single trigger position, determining a trigger area within a preset range in which the trigger position is located as the first jam-prone area; and
in the event of a plurality of trigger positions, clustering the plurality of trigger areas corresponding to the plurality of trigger positions to obtain at least one of the first jam-prone areas.

4. The method according to claim 3, wherein the clustering the plurality of trigger areas corresponding to the plurality of trigger positions to obtain at least one of the first jam-prone areas comprises:
clustering the plurality of trigger areas according to mutual distances between the plurality of trigger positions to obtain the first jam-prone area.

5. The method according to claim 3 or 4, wherein the preset range is a range within 50 cm from the trigger position.

6. The method according to any of claims 2 to 5, wherein the preset escape action is an escape action triggered after the cleaning robot slips.

7. The method according to any of claims 1 to 6, wherein the determining the first jam-prone area where the continuous obstacle with the preset height is located as the second jam-prone area comprises:
acquiring obstacle height information in the first jam-prone area;
determining whether there is a continuous obstacle that meets the preset height in the first jam-prone area based on the obstacle height information; and
if yes, determining the first jam-prone area as the second jam-prone area.

8. The method according to any of claims 1 to 7, wherein the preset height is between 1.5 cm and 2 cm.

9. The method according to any of claims 1 to 8, wherein the judging whether the second jam-prone area is the doorsill area based on the second jam-prone area and the map information of the room where the second jam-prone area is located comprises:
selecting a preset number of sampling points in the second jam-prone area;
acquiring the nearest obstacle distance information of the sampling points in the room map based on the room map information; and
judging whether the second jam-prone area is the doorsill area based on the nearest obstacle distance information.

10. The method according to claim 9, wherein
acquiring the nearest obstacle distance information of the sampling points in the room map based on the room map information comprises:
acquiring the nearest obstacle distance of each of the sampling points in all directions by taking, on the room map, the sampling point as a starting point to form the nearest obstacle distance information.

11. The method according to claim 9 or 10, wherein
the judging whether the second jam-prone area is the doorsill area based on the nearest obstacle distance information comprises:
identifying the nearest obstacle distance information by using a neural network classifier to determine whether the second jam-prone area is the doorsill area,
wherein the neural network classifier is obtained by training the nearest obstacle distance training information.

12. The method according to any of claims 9 to 11, further comprising:
in the process of judging whether the second jam-prone area is the doorsill area using the plurality of pieces nearest obstacle distance information acquired based on the preset number of the sampling points, determining the second jam-prone area as the doorsill area as long as the nearest obstacle distance information corresponding to any one of the sampling points indicates that the second jam-prone area is the doorsill area.

13. The method according to any of claims 9 to 12, wherein the preset number is between 8 and 10.

14. A doorsill area identification apparatus, comprising:
a first jam-prone area determining module configured to determine a first jam-prone area based on escape information of a cleaning robot during a sweeping process;
a second jam-prone area determining module configured to determine the first jam-prone area where a continuous obstacle with a preset height exists as a second jam-prone area; and
a doorsill area judging module configured to judge whether the second jam-prone area is a doorsill area based on the second jam-prone area and map information of a room where the second jam-prone area is located.

15. A computer-readable storage medium configured to store a computer program which, when executed by a processor, implements the doorsill area identification method according to any of claims 1 to 13.

16. An electronic device, comprising:
a processor; and
a memory configured to store executable instructions of the processor,
wherein the processor is configured to execute the doorsill area identification method according to any of claims 1 to 13 by executing the executable instructions.
